# DEMANDE DE BREVET EUROPEEN

(11) **EP 2 444 303 A1**
(43) Date de publication de la demande: **25.04.2012**
(21) Numéro de dépôt: 11306349.9
(22) Date de dépôt: 19.10.2011
(51) Int. Cl.: B62D 31/02, B62D 47/02

(54) **Vehicule routier pour le transport en commun de voyageurs, par exemple du genre autocar ou autobus**

(30) Priorité: 19.10.2010 FR 1058515
(71) Demandeur: Carrier Carrosserie, 75116 Paris (FR)
(72) Inventeur: Ringeard, Arnaud, 85170 DOMPIERRE SUR YON (FR)
(74) Mandataire: Orsini, Fabienne

(57) **Abrégé**

La présente invention porte sur un véhicule routier pour le transport en commun de voyageurs, par exemple du genre autocar ou autobus, lequel véhicule (1) comprend
- un châssis équipé d'un moteur, et - un habitacle (3) comportant une pluralité de rangées de sièges (21, 22) accessibles par un couloir longitudinal (23).

Ce véhicule (1) est caractérisé par le faut que ledit moteur est installé par-dessus ledit essieu avant, et par le fait que ledit couloir longitudinal (23) comprend (i) un tronçon arrière central (23a), (ii) un tronçon avant (23b), déporté latéralement par rapport audit tronçon arrière de couloir (23a), et (iii) un tronçon transversal (23c), reliant lesdits tronçons arrière (23a) et avant (23b) du couloir (23).

## Description

La présente invention concerne un véhicule routier pour le transport en commun de voyageurs, par exemple du genre autocar ou autobus, ainsi que son procédé de fabrication.

Les véhicules poids lourds adaptés au transport de marchandise, sont généralement fabriqués sur la base d'un châssis « standard ».

Par châssis « standard », on entend en particulier un châssis dans lequel le moteur est, d'une part, installé par-dessus l'essieu avant et, d'autre part, recouvert par la cabine de conduite.

Ce type de châssis a l'intérêt d'être relativement courant, avec des coûts de fabrication et de maintenance réduits.

D'autre part, les véhicules poids lourd pour le transport en commun de voyageurs comportent très souvent un habitacle qui présente une partie arrière et une partie avant en porte-à-faux, respectivement par rapport aux essieux arrière et avant du châssis, pour optimiser leur capacité d'accueil (voir par exemple le véhicule décrit dans le document US-1 861 002).

L'habitacle en question comprend:
- une carrosserie, comportant deux parois latérales dont l'une est munie d'au moins une porte d'accès avant, et
- un plancher, s'étendant au-dessus du châssis et sur lequel est rapportée une pluralité de rangées de sièges juxtaposés qui sont accessibles par un couloir longitudinal.

Le couloir d'accès aux sièges est classiquement central, les rangées de sièges étant réparties de part et d'autre sur toute sa longueur.

Comme décrit dans le document US-1 861 002, ce couloir comprend - un tronçon arrière central ou quasi-central, - un tronçon avant déporté latéralement, qui est délimité d'un côté par l'une des parois latérales de la carrosserie, et - un tronçon transversal intermédiaire, reliant lesdits tronçons avant et arrière.

Dans le cas de tels véhicules de transport en commun, pour préserver un nombre optimal de places assises et pour limiter les problèmes liés à l'encombrement du moteur, il est courant d'installer l'habitacle sur un châssis « spécifique » dans lequel le moteur est déporté sur une partie arrière en porte-à-faux.

Or, la fabrication et la maintenance de tels châssis spécifiques, conçus uniquement pour les véhicules de transport en commun, s'avèrent relativement onéreuses.

Pour remédier à cet inconvénient, la demanderesse a développé une nouvelle structure de véhicules pour le transport en commun de voyageurs, qui a l'intérêt d'être basée sur un châssis « standard », avec les réductions de coûts qui en découlent, tout en préservant une capacité optimale d'accueil en passagers.

Ce type de véhicule selon l'invention permet d'éviter la conception, ou l'adaptation, des châssis de véhicules poids lourd pour l'application particulière des véhicules pour le transport en commun de voyageurs.

Les fabricants de tels véhicules ont ainsi à leur disposition un éventail plus large de châssis.

Pour cela, le véhicule routier selon l'invention est du genre comprenant:
- un châssis équipé d'un essieu avant, d'un essieu arrière et d'un moteur, et
- un habitacle présentant au moins une partie en porte-à-faux avant par rapport audit essieu avant, lequel habitacle comprend une carrosserie, comportant deux parois longitudinales dont l'une est munie d'au moins une porte avant d'accès, et un plancher, s'étendant au-dessus dudit châssis et sur lequel est rapportée une pluralité de rangées de sièges juxtaposés accessibles par un couloir longitudinal, lesquelles rangées de sièges sont orientées perpendiculairement à la longueur dudit plancher.

Le couloir longitudinal de ce véhicule comprend en plus :
(i) un tronçon arrière central, ménagé au niveau de la partie de plancher située en arrière par rapport audit essieu avant et audit moteur, et de part et d'autre duquel sont réparties des rangées arrière de sièges,
(ii) un tronçon avant, qui s'étend au moins au niveau de la partie de plancher sus-jacente dudit essieu avant et dudit moteur, qui est déporté latéralement par rapport audit tronçon arrière, et qui est délimité latéralement, d'un côté, par l'une des parois latérales de la carrosserie, et
(iii) un tronçon transversal, reliant lesdits tronçons arrière et avant du couloir.

Et ce véhicule est caractérisé par le fait que son moteur est installé par-dessus ledit essieu avant, et par le fait que son tronçon avant de couloir est délimité, de l'autre côté de la paroi latérale de carrosserie, par au moins une rangée avant de sièges.

D'autres caractéristiques avantageuses, pouvant être prises en combinaison ou indépendamment les unes des autres, sont précisées ci-dessous :
- la partie de plancher sus-jacente de l'essieu avant et du moteur porte deux rangées avant de sièges qui sont agencées avec leurs assises disposées dos à dos; dans ce cas, ladite ou lesdites rangées avant de sièges comprennent de préférence chacune quatre sièges juxtaposés;
- la partie de plancher sus-jacente de l'essieu avant et du moteur comporte un plateau surélevé par rapport au couloir, lequel plateau porte la ou les rangées avant de sièges ;
- le châssis est prolongé, en avant de l'essieu avant, par une structure rapportée s'étendant en porte-à-faux, lequel châssis et laquelle structure avant en porte-à-faux sont solidarisés ensemble par le biais de moyens de fixation ; dans ce cas, la structure avant en porte-à-faux consiste de préférence en (i) un tronçon de châssis rapporté, ou (ii) un élément de soubassement constitutif de la carrosserie ;
- le tronçon avant de couloir est délimité par la paroi longitudinale de carrosserie munie de la porte d'accès avant ; et ce tronçon avant se termine, d'un côté, au niveau d'un escalier en regard de cette porte d'accès avant, et de l'autre côté, au niveau d'une rangée arrière de sièges.

La présente invention porte encore sur un procédé de fabrication d'un véhicule routier défini ci-dessus, lequel procédé comporte au moins les étapes suivantes :
- une étape de fourniture d'un châssis de véhicule routier équipé d'un essieu avant, d'un essieu arrière et d'un moteur implanté par-dessus ledit essieu avant, et
- une étape d'installation, sur ledit châssis, d'un l'habitacle comportant au moins une partie avant en porte-à-faux par rapport audit dudit essieu avant.

Le châssis correspondant consiste avantageusement en un châssis de véhicule routier équipé d'une cabine de conduite, implantée au niveau dudit essieu avant et au-dessus dudit moteur ; et préalablement à l'étape d'installation de l'habitacle, ledit procédé comprend une étape de démontage de cette cabine de conduite.

L'étape d'installation de l'habitacle comprend de préférence une étape d'allongement du châssis du côté de son extrémité avant (i) par la fixation d'un tronçon avant de châssis, ou (ii) par le montage d'une carrosserie équipée d'un élément de soubassement venant dans le prolongement dudit châssis.

Encore selon l'invention, le procédé comprend une étape d'implantation des sièges sur le plancher rapporté, de manière à constituer les différents tronçons du couloir.

L'invention est encore illustrée, sans aucunement être limitée, par la description suivante d'un mode de réalisation particulier, en relation avec les dessins annexés dans lesquels :
- la figure 1 est une vue de côté d'un véhicule selon l'invention, dont l'une des parois longitudinales de carrosserie (côté portes d'accès) n'est pas représentée ;
- la figure 2 est une vue de dessus du plancher équipant le véhicule selon la figure 1, sur lequel sont convenablement rapportées les différentes rangées de sièges ;
- la figure 3 est une vue partielle et agrandie de la figure 2, au niveau des rangées avant de sièges;
- la figure 4 est une vue de côté de la partie de véhicule représentée sur la figure 3, selon la convention de la figure 1 ;
- la figure 5 est une vue en perspective de la partie de véhicule illustrée sur les figures 3 et 4.

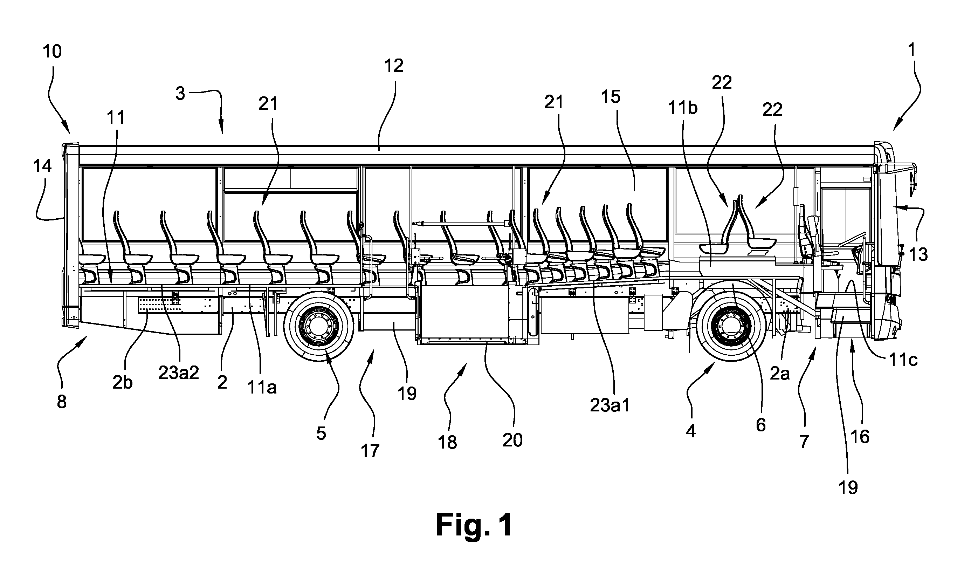

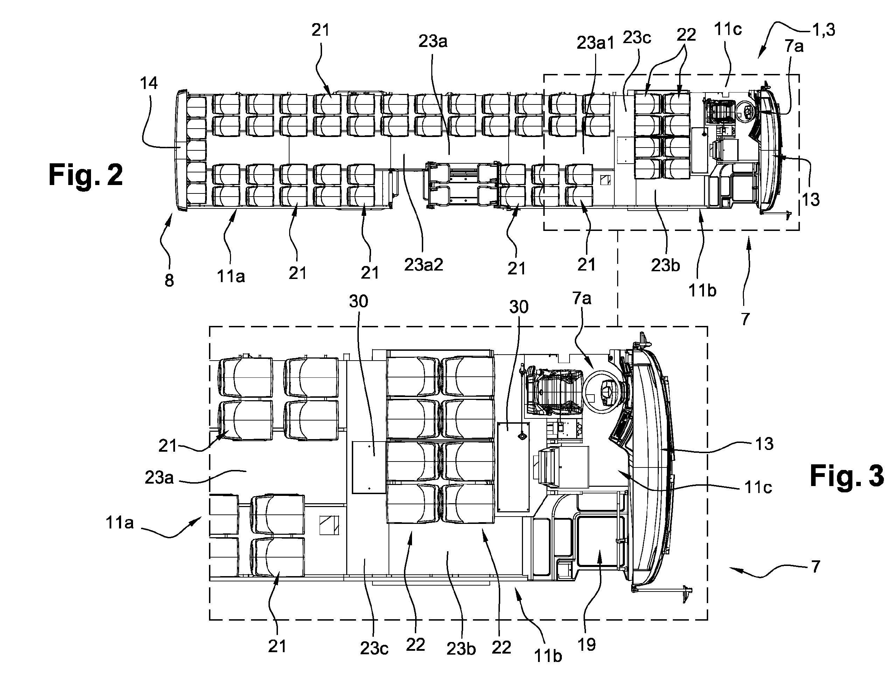

Le véhicule poids lourd 1, illustré sur les figures 1 et 2, consiste en un autocar qui est adapté pour le transport en commun de personnes, sur de longues distances, en particulier pour les déplacements du type périurbain et interurbain.

Tel qu'illustré sur la figure 1, le véhicule 1 comprend un châssis 2 portant un habitacle 3.

Le châssis 2 consiste en une ossature (i) formée d'un ensemble de profilés métalliques assemblés, et (ii) comportant une extrémité avant 2a et une extrémité arrière 2b.

Ce châssis 2 est équipé de deux essieux : un essieu avant 4 et un essieu arrière 5.

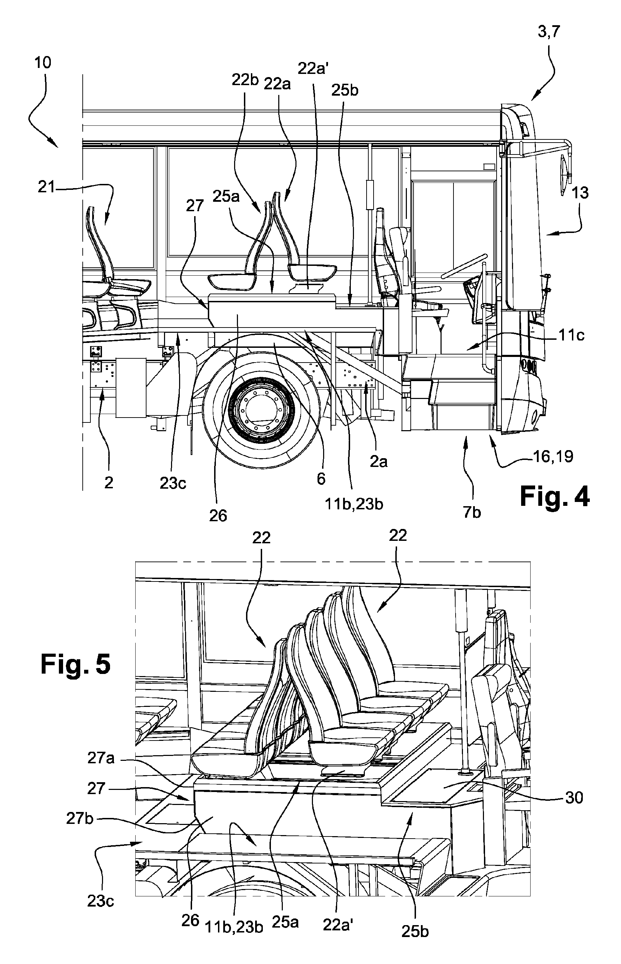

Un moteur 6 est ici implanté au niveau de l'essieu avant 4, par-dessus ce dernier. Sur les figures 1 et 4, ce moteur 6 est masqué en grande partie par l'habitacle rapporté 3.

Le châssis 2 est ici dépourvu, ou pratiquement dépourvu, d'une partie en porte-à-faux.

Plus exactement, le châssis 2 comporte une partie avant en porte-à-faux négligeable, du fait de la distance relativement courte entre ledit essieu avant 4 et l'extrémité avant 2a du châssis 2, par exemple inférieure à 1500 mm.

L'habitacle 3 présente ici deux parties en porte-à-faux par rapport aux essieux 4 et 5 :
(i) une partie avant 7, en porte-à-faux par rapport à l'essieu avant 4, recevant le poste de conduite 7a, et
(ii) une partie arrière 8, en porte-à-faux par rapport à l'essieu arrière 5.

En l'occurrence, la partie avant 7 de l'habitacle 3 s'étend ici en porte-à-faux avant par rapport à l'extrémité avant 2a du châssis 2. De manière alternative, non représentée, un tronçon complémentaire de châssis peut être rapporté au niveau de l'extrémité avant 2a de ce châssis 2.

A titre indicatif, le porte-à-faux des parties avant 7 et arrière 8, par rapport aux essieux 4 et 5 respectifs, est par exemple d'au moins 2000 mm (au moins pour la partie avant en porte-à-faux 7).

L'habitacle 3 se compose d'une carrosserie 10 et d'un plancher 11.

La carrosserie 10 comporte un toit 12 et une ceinture de parois verticales. Cette dernière est composée d'une paroi avant 13 (côté conducteur), d'une paroi arrière 14 (à l'opposé du conducteur) et de deux parois longitudinales 15 (seule l'une de ces parois longitudinales est représentée sur les figures 1 et 4).

L'une des parois longitudinales 15 (ici non représentée) comporte des portes d'accès à l'habitacle 10 (non représentées).

Sur les figures 1 et 2, seuls les accès correspondants sont représentés. Pour faciliter la suite de la description, les accès et leurs portes associées sont désignés par les mêmes repères numériques.

La paroi longitudinale 15, à distance du poste de conduite 7a, comporte ainsi :
(i) une porte d'accès avant 16, ménagée au niveau du porte-à-faux avant 7 de l'habitacle 10,
(ii) une porte d'accès arrière 17, ménagée en arrière par rapport à l'essieu avant 4, ici entre les deux essieux 4 et 5, et
(iii) une porte d'accès complémentaire 18, juxtaposée à ladite porte d'accès arrière 17, prévue pour le passage des usagers se déplaçant en fauteuil roulant.

En position fermée, ces trois portes d'accès 16, 17 et 18 font partie intégrante de la carrosserie 10.

Au niveau de la partie avant en porte-à-faux 7, la carrosserie 10 comporte encore un élément de soubassement 7b, qui est masqué notamment par les parois de la carrosserie 10 (figure 4).

Cet élément de soubassement 7b est constitué notamment par des profilés métalliques et des plaques métalliques, convenablement assemblés entre les parois de la carrosserie 10 et le châssis 2.

Cet élément de soubassement 7b est installé dans le prolongement du châssis 2. Il est fixé avec ce dernier par l'intermédiaire de moyens d'absorption des vibrations, pour optimiser le confort au niveau du poste de conduite 7a.

Le plancher 11 s'étend au-dessus du châssis 2, et comporte une face supérieure participant à la délimitation de l'habitacle 3.

Sur sa longueur, ce plancher 11 peut être considéré comme comportant trois parties :
(i) une partie arrière 11 a, située en arrière par rapport à l'essieu avant 4 et au moteur 6 associé,
(ii) une partie intermédiaire 11b, sus-jacente dudit essieu avant 4 et dudit moteur 6, et
(iii) une partie avant 11c, ménagée en avant par rapport audit essieu avant 4 et audit moteur 6, disposée au niveau de la partie avant en porte-à-faux 7 de l'habitacle 3.

Comme on peut le voir sur la figure 1, une structure d'escalier 19 est implantée au niveau de ce plancher 11, en regard de la porte d'accès avant 16 et de la porte d'accès arrière 17. De même, une plateforme élévatrice 20 est implantée en regard de la porte d'accès complémentaire 18.

Une pluralité de rangées de sièges juxtaposés 21, 22 sont rapportées sur ce plancher 11, et sont accessibles par un couloir 23.

Ces rangées de sièges 21, 22 sont chacune orientées perpendiculairement à la longueur dudit plancher 11, et peuvent être divisées en deux groupes :
(i) des rangées arrière de sièges 21, ménagées sur la partie arrière 11a du plancher 11, et
(ii) des rangées avant de sièges 22, ménagées au niveau de la partie intermédiaire 11b dudit plancher 11.

Tel qu'illustré sur la figure 2, pour tenir compte de l'encombrement du moteur 6 au niveau de l'essieu avant 4, les rangées de sièges 21, 22 sont accessibles par un couloir longitudinal 23 qui comprend :
(i) un tronçon arrière 23a, qui est ménagé au niveau de la partie arrière 11 a du plancher 11,
(ii) un tronçon avant 23b, qui s'étend au niveau de la partie intermédiaire 11 b du plancher 11 et qui est déporté latéralement par rapport audit tronçon arrière 23a de couloir 23, et
(iii) un tronçon transversal 23c, reliant lesdits tronçons arrière 23a et avant 23b dudit couloir 23.

Ce tronçon avant 23b du couloir 23, décalé latéralement, va ainsi permettre de contourner le moteur 6 porté par l'essieu avant 4.

Plus précisément, les tronçons arrière 23a et avant 23b du couloir 23 s'étendent parallèlement, ou au moins approximativement parallèlement, l'un par rapport à l'autre et par rapport à l'axe longitudinal du véhicule 1.

Le tronçon transversal 23c s'étend quant à lui perpendiculairement par rapport, d'une part, aux tronçons arrière 23a et avant 23b et, d'autre part, à l'axe longitudinal du véhicule 1.

Le tronçon arrière 23a du couloir 23 est ici ménagé de manière centrale, confondu avec l'axe médian longitudinal du plancher 11.

Les rangées arrière de sièges 21 sont alors réparties de part et d'autre du tronçon arrière 23a du couloir 23. Ces rangées arrière de sièges 21 sont ici chacune constituées de deux sièges juxtaposés, orientés face route.

Le tronçon avant 23b est délimité latéralement, d'un côté, par les rangées avant de sièges 22 et, de l'autre côté, par l'une des parois longitudinales 15 de la carrosserie 10.

La paroi longitudinale 15 en question, délimitant le tronçon avant 23b de couloir 23, correspond à la paroi 15 munie des portes d'accès 16, 17 et 18 précitées.

Ce tronçon avant 23b se termine (i) à son extrémité avant, au niveau de l'escalier 19 en regard de la porte avant d'accès 16, et (ii) à son extrémité arrière, au niveau d'une rangée arrière de sièges 21.

Cet escalier 19 comporte deux séries de marches, perpendiculaires l'une par rapport à l'autre : (i) une série transversale, pour accéder au poste de conduite 7a, et (ii) une série longitudinale, pour accéder au couloir 23.

Les rangées avant de sièges 22 sont ici au nombre de deux, constituées chacune de quatre sièges juxtaposés.

Ces deux rangées avant de sièges 22 sont ici installées avec leurs assises disposées dos à dos. Une rangée avant de sièges 22a est orientée face à la route ; et l'autre rangée avant de sièges 22b est orientée dos à la route.

Toujours pour tenir compte du positionnement particulier du moteur 6, les parties 11a, 11 b et 11c du plancher 11, et les tronçons 23a, 23b et 23c de couloir associé 23, sont ménagés selon différents niveaux.

La partie intermédiaire 11b du plancher 11, et en particulier son tronçon avant 23b de couloir 23, est décalée en hauteur, vers le haut, par rapport à la partie avant 11c dudit plancher 11.

Par exemple, le décalage en hauteur entre la partie avant 11c du plancher 11 et le tronçon avant 23b du couloir 23 est avantageusement inférieur à 250 mm (hauteur maximale de la marche entre ces deux zones de l'habitacle 3).

Le tronçon avant 23b et le tronçon transversal 23c du couloir 23 s'étendent, quant à eux, dans un même plan horizontal ou au moins approximativement horizontal.

Comme illustré sur les figures 1 et 2, le tronçon arrière 23a du couloir 23 comprend quant à lui deux parties :
(i) une partie avant inclinée 23a1, en pente descendante de l'avant vers l'arrière du véhicule 1, et
(ii) une partie arrière 23a2 s'étendant horizontalement, ou au moins approximativement horizontalement.

Cette forme particulière est obtenue par un agencement diédrique de la partie arrière 11 a du plancher 11, avec une longueur avant inclinée et une longueur arrière horizontale.

Cette forme permet de limiter le nombre prévu de marches au niveau de l'escalier 19 associé à la porte d'accès arrière 17.

A titre indicatif, la pente de la partie avant 23a1 du tronçon arrière 23a est au maximum de 8 %.

Le décalage en hauteur entre le tronçon transversal 23c du couloir 23 et la partie arrière 23a2 du tronçon arrière 23a est avantageusement inférieur à 250 mm.

Tel qu'illustré par les figures 4 et 5, encore pour optimiser le capotage du moteur 6 sans perte d'espace utile dans l'habitacle 3, la partie intermédiaire 11 b du plancher 11 comporte un plateau surélevé 25 qui porte les rangées avants de sièges 22.

Le plateau 25 est surélevé par rapport au couloir 23 attenant, et en particulier par rapport aux tronçons avant 23b et transversal 23c.

Le plateau 25 est déporté latéralement, c'est-à-dire attenant à la paroi longitudinale 15 qui est située côté poste de conduite 7a, et à distance de l'autre paroi longitudinale 15.

Ce plateau 25 comporte ici deux paliers horizontaux, décalés en hauteur l'un par rapport à l'autre :
(i) un palier supérieur arrière 25a, recevant les rangées avant de sièges 22, et
(ii) un palier inférieur avant 25b, servant de repose pieds pour la rangée avant de sièges 22a orientée face route.

De manière générale, la distance en hauteur entre le plancher et le dessus de l'assise des sièges est avantageusement comprise entre 400 et 500 mm.

Par exemple, le décalage en hauteur du plateau 25 par rapport au couloir 23 est avantageusement compris entre 150 et 250 mm. Cette hauteur dépend principalement de la hauteur du moteur.

Les bordures du plateau 25 sont raccordées au couloir 23 par deux parois verticales de finition :
(i) une paroi latérale verticale 26, orientée selon la longueur du véhicule 1 et à distance de la paroi longitudinale 15 munie des portes d'accès, et
(ii) une paroi transversale arrière 27, comportant une forme de dièdre avec un panneau supérieur 27a, vertical, et un panneau inférieur 27b, incliné vers l'avant du haut vers le bas; ce décalage permet de respecter un espace adapté pour le logement des pieds des passagers et permet de réduire la longueur totale du véhicule 1.

Sur les figures 4 et 5, l'assise de la rangée avant de sièges 22a, orientée face à la route, est fixée à distance du palier supérieur 25a par l'intermédiaire d'un piètement 22a' ; l'assise de l'autre rangée avant de sièges 22b, orientée dos à la route, est fixée attenante au palier supérieur 25a (sans piètement 22a').

En fixant les deux rangées de sièges 22 à des hauteurs différentes, les interférences au niveau des dossiers sont limitées, et par conséquent la surface au sol nécessaire à la mise dos à dos des sièges est réduite ; cela permet par ailleurs d'améliorer l'espace situé devant le moteur, nécessaire au refroidissement efficace de ce dernier.

Le plateau 25 et les parois verticales de finition 26, 27 forment ainsi ensemble une sorte de caisson de capotage pour le moteur 6 sous-jacent.

Pour faciliter l'accès au moteur 6, des trappes d'accès 30 sont prévues dans le plancher 11, ici l'un dans le palier inférieur avant 25b et l'autre dans le tronçon transversal 23c.

Le véhicule routier 1, selon les figures 1 à 5, peut être fabriqué par le procédé comportant les étapes suivantes.

Tout d'abord, ce procédé comprend une étape de fourniture d'un châssis 2 pour véhicule routier poids lourd équipé d'un essieu arrière 5 et d'un essieu avant 4 par-dessus lequel sont installés le moteur 6 et une cabine de conduite.

Ensuite, la cabine de conduite est démontée. En avant de l'essieu avant 4, le châssis 2 est dépourvu de partie en porte-à-faux, ou peut être considéré comme dépourvu d'une telle partie en porte-à-faux (comme précisé ci-dessus).

Le procédé comporte ensuite une étape d'installation de l'habitacle 3 du véhicule 1 sur le châssis 2.

Pour cela, on réalise le montage de la carrosserie 10 avec la fixation de l'élément de soubassement 7b sur le châssis 2, dans le prolongement de ce dernier, par tout moyen approprié (par exemple par soudage et de préférence par boulonnage).

Ce montage de l'habitacle 3 est de plus mis en oeuvre de sorte à obtenir une structure telle que décrite ci-dessus en relation avec les figures 1 à 5, avec notamment l'implantation des rangées de sièges 21, 22 sur le plancher 11 de manière à constituer les différents tronçons 23a, 23b et 23c du couloir 23.

De plus, du fait du déplacement du poste de conduite 7a sur le porte-à-faux avant 7 de l'habitacle 3, le procédé comprend avantageusement une étape de montage de moyens de renvoi/transmission (non représentés), notamment pour la partie direction et la partie boite de vitesses.

On obtient ainsi le véhicule 1 tel que décrit ci-dessus en relation avec les figures 1 à 5, avec les avantages correspondants.

De manière alternative, préalablement à la pose de l'habitacle 3, il est procédé à une étape d'allongement du châssis du côté de son extrémité avant 2a par la fixation d'un tronçon avant de châssis.

Là encore, la fixation du tronçon avant de châssis est mise en oeuvre par tout moyen approprié, par exemple par soudage et de préférence par boulonnage.

## Revendications

1. Véhicule routier pour le transport en commun de voyageurs, par exemple du genre autocar ou autobus, lequel véhicule (1) comprend - un châssis (2) équipé d'un essieu avant (4), d'un essieu arrière (5) et d'un moteur (6), et - un habitacle (3) présentant au moins une partie en porte-à-faux avant (7) par rapport audit essieu avant (4), lequel habitacle (3) comprend une carrosserie (10), comportant deux parois longitudinales (15) dont l'une est munie d'au moins une porte avant d'accès (16), et un plancher (11), s'étendant au-dessus dudit châssis (2) et sur lequel est rapportée une pluralité de rangées de sièges juxtaposés (21, 22) accessibles par un couloir longitudinal (23), lesquelles rangées de sièges (21, 22) sont orientées perpendiculairement à la longueur dudit plancher (11),
ledit couloir longitudinal (23) comprenant :
(i) un tronçon arrière central (23a), ménagé au niveau de la partie de plancher (11a) située en arrière par rapport audit essieu avant (4) et audit moteur (6), et de part et d'autre duquel sont réparties des rangées arrières de sièges (21),
(ii) un tronçon avant de couloir (23b), qui s'étend au moins au niveau de la partie de plancher (11b) sus-jacente dudit essieu avant (4) et dudit moteur (6), qui est déporté latéralement par rapport audit tronçon arrière de couloir (23a) et qui est délimité latéralement, d'un côté, par l'une des parois latérales (15) de la carrosserie (10), et
(iii) un tronçon transversal (23c), reliant lesdits tronçons arrière (23a) et avant (23b) du couloir (23),
lequel véhicule (1) est **caractérisé en ce que** ledit moteur (6) est installé par-dessus ledit essieu avant (4), et **en ce que** ledit tronçon avant de couloir est délimité, de l'autre côté de ladite paroi latérale (15) de la carrosserie (10), par au moins une rangée avant de sièges (22).

2. Véhicule routier selon la revendication 1, **caractérisé en ce que** la partie de plancher (11b) sus-jacente de l'essieu avant (4) et du moteur (6) porte deux rangées avant de sièges (22) qui sont agencées avec leurs assises disposées dos à dos.

3. Véhicule routier selon l'une quelconque des revendications 1 ou 2, **caractérisé en ce que** la ou les rangées avant de sièges (22) comprennent chacune quatre sièges juxtaposés.

4. Véhicule routier selon l'une quelconque des revendications 1 à 3, **caractérisé en ce que** la partie de plancher (11 b) sus-jacente de l'essieu avant (4) et du moteur (6) comporte un plateau (25) surélevé par rapport au couloir (23), lequel plateau (25) porte la ou les rangées avant de sièges (22).

5. Véhicule routier selon l'une quelconque des revendications 1 à 4, **caractérisé en ce que** le châssis (2) est prolongé, en avant de l'essieu avant (4), par une structure rapportée (7b) s'étendant en porte-à-faux, lequel châssis (2) et laquelle structure avant en porte-à-faux (7b) sont solidarisés ensemble par le biais de moyens de fixation.

6. Véhicule routier selon la revendication 5, **caractérisé en ce que** la structure avant en porte-à-faux (7b) consiste en (i) un tronçon de châssis rapporté, ou (ii) un élément de soubassement (7b) constitutif de la carrosserie (10).

7. Véhicule routier selon l'une quelconque des revendications 1 à 6, **caractérisé en ce que** le tronçon avant (23b) de couloir (23) est délimité par la paroi longitudinale (15) de carrosserie (10) munie de la porte d'accès avant (16), et lequel tronçon avant (23b) se termine, d'un côté, au niveau d'un escalier (19) en regard de ladite porte avant d'accès (16), et de l'autre côté, au niveau d'une rangée arrière de sièges (21).

8. Procédé de fabrication d'un véhicule routier selon l'une quelconque des revendications 1 à 7, **caractérisé en ce qu'**il comporte au moins les étapes suivantes :
- une étape de fourniture d'un châssis (2) de véhicule routier équipé d'un essieu avant (4), d'un essieu arrière (5) et d'un moteur (6) implanté par-dessus ledit essieu avant (4), et
- une étape d'installation, sur ledit châssis (2), de l'habitacle (3) comportant au moins une partie avant (7) en porte-à-faux par rapport audit essieu avant (4).

9. Procédé selon la revendication 8, **caractérisé en ce que** le châssis (2) de l'étape de fourniture consiste en un châssis (2) de véhicule routier équipé d'une cabine de conduite, implantée au niveau dudit essieu avant (4) et au-dessus dudit moteur (6), et **en ce que**, préalablement à l'étape d'installation de l'habitacle, ledit procédé comprend une étape de démontage de ladite cabine de conduite.

10. Procédé selon l'une quelconque des revendications 8 ou 9, **caractérisé en ce que** l'étape d'installation de l'habitacle comprend une étape d'allongement du châssis (2) du côté de son extrémité avant (2a), (i) par la fixation d'un tronçon avant de châssis, ou (ii) par le montage d'une carrosserie (10) équipée d'un élément de soubassement (7b) venant dans le prolongement dudit châssis (2).

11. Procédé selon l'une quelconque des revendications 8 à 10, **caractérisé en ce qu'**il comprend une étape d'implantation des sièges sur le plancher (11) rapporté, de manière à constituer les différents tronçons (23a, 23b, 23c) du couloir (23).
